Europäisches Patentamt

(19) European Patent Office

Office européen des brevets

(11) Numéro de publication: **0 251 892**
**B1**

(12) **FASCICULE DE BREVET EUROPEEN**

(51) Int. Cl.⁴: **B01J 29/06**

(45) Date de publication du fascicule du brevet:
**10.01.90**

(21) Numéro de dépôt: **87401437.6**

(22) Date de dépôt: **23.06.87**

(54) Systèmes zéolitiques binaires, leur synthèse et leur utilisation.

(30) Priorité: **24.06.86 FR 8609112**

(43) Date de publication de la demande:
**07.01.88 Bulletin 88/1**

(45) Mention de la délivrance du brevet:
**10.01.90 Bulletin 90/2**

(84) Etats contractants désignés:
**BE DE GB IT NL**

(56) Documents cités:
**EP-A- 0 118 632**
**FR-A- 2 365 520**

(73) Titulaire: **ELF FRANCE, Société Anonyme dite:, Tour Elf 2 place de la Coupole La Défense 6, F-92400 Courbevoie(FR)**

(72) Inventeur: **Fajula, François, 6, rue du Jeu de Mail, F-34160 Theyran(FR)**
Inventeur: **Figueras, François, 82, rue de l'Aiguelongue, F-34000 Montpellier(FR)**
Inventeur: **Gueguen, Claude, 9, rue de Chapoly, F-69540 Irigny(FR)**
Inventeur: **Dutartre, Roger, Chemin des Mazes, F-34980 Prades le Lez(FR)**

(74) Mandataire: **Boillot, Marc, SOCIETE NATIONALE ELF AQUITAINE Division Propriété Industrielle Tour Elf, F-92078 Paris la Défense Cédex 45(FR)**

## Description

Cette invention concerne des systèmes zéolitiques binaires composés de deux zéolites de structures cristallines différentes mais ayant des unités structurales en commun, leur procédé de synthèse et leur utilisation.

Le phénomène de cocristallisation de deux zéolites est bien connu dans l'art de la synthèse des zéolites. Il est dû au fait que dans les milieux propices à leur développement, les zéolites sont en état métastable. Lors de la nucléation ou au cours de l'étape de croissance, plusieurs germes peuvent apparaître et se développer, conduisant ainsi à des mélanges de zéolites. Ces mélanges évoluent généralement selon la règle dite d'OSWALD qui prévoit que tout système évolue vers son état stable en passant par l'intermédiaire d'états métastables. En arrêtant la cristallisation à un moment donné, on arrête cette évolution et on isole un mélange de cristaux de zéolites où chacune des espèces constitue une phase séparée aisément identifiable d'après sa morphologie par examen microscopique.

Si on laisse la cristallisation se poursuivre assez longtemps, les zéolites métastables se transforment et l'on n'isole que la zéolite stable dans le milieu.

On connaît également le phénomène d'intercroissance des cristaux de zéolites. Il correspond à une cristallisation hétérogène où des cristaux d'une zéolite B paraissent de façon sporadique pendant la cristallisation d'une zéolite A. L'examen microscopique ne permet généralement pas de détecter les intercroissances de zéolites. Celles-ci sont mises en évidence par des études de microdiffraction où les zones de la zéolite B apparaissent comme des défauts dans la structure de la zéolite A. L'exemple le plus connu d'intercroissance est celui de la zéolite T qui est issue de l'intercroissance d'offretite et d'erionite. Comme l'intercroissance conduit à une perturbation dans la forme et/ou la taille des cages et canaux, la zéolite AB obtenue aura des propriétés différentes des deux zéolites qui la composent.

Aussi bien la cocristallisation que l'intercroissance des cristaux apparaissent de façon spontanée et ne conduisent pas à des produits industriellement utilisables.

On connaît également des systèmes zéolitiques binaires comprenant une zéolite (c) formant le cœur du système et une zéolite (D) formant une couronne qui enveloppe (c); les 2 zéolites (c) et (D) ayant une composition chimique différente mais sont isostructurales. Des exemples de tels systèmes sont décrits dans FR-A 2 365 520 et EP-A 0 118 632.

Nous avons trouvé maintenant un nouveau système zéolitique binaire présentant un grand intérêt industriel.

Le système zéolitique binaire selon l'invention est composé de deux zéolites, A et B, de structures cristallines différentes mais ayant des unités structurales en commun caractérisé en ce que les cristaux de la zéolite A formant un noyau central sont entourés d'une couronne de cristaux de la zéolite B, les zéolites A et B étant disposées concentriquement et suivant le même axe longitudinal.

Par unité structurale nous entendons les cages et canaux qui forment la structure cristalline des zéolites. La formation de systèmes zéolitiques binaires selon l'invention devient possible si une même unité structurale fait partie de la structure cristalline des deux zéolites.

Dans ces systèmes la surface de contact entre les deux zéolites A et B est importante alors que la distance entre les deux structures sera réduite. Les propriétés mécaniques sont améliorées par l'existence d'une liaison chimique. Ces deux caractéristiques sont particulièrement intéressantes pour les applications en catalyse. Ces solides ne peuvent être différenciés de simples mélanges physiques, formés par cocristallisation, sur la seule base de leurs diffractogrammes de rayons X. Cependant leur aspect déterminé par microscopie électronique à balayage est caractéristique. La microphotographie fait apparaître que chaque particule est composée d'un noyau central d'une zéolite A, entouré d'une couronne d'une zéolite B, les deux zéolites étant disposées selon le même axe longitudinal.

Le procédé de synthèse de tels systèmes zéolitiques binaires, composés de deux zéolites A et B ayant des unités structurales en commun est caractérisé en ce qu'on introduit un gel de nucléation renfermant les germes de la zéolite A dans un gel de croissance ou les paramètres de cristallisation favorisent la cristallisation de la zéolite B.

Le gel de nucléation est composé d'une source d'alumine, d'une source de silice et d'au moins un cation de nucléation. Il est utilisé après vieillissement accompagné de la formation de germes de la zéolite A.

Le gel de croissance peut être identique dans sa composition au gel de nucléation frais mais souvent il en diffère par la nature ou la concentration des cations de nucléation.

Parmi les paramètres qui conduisent à la cristallisation d'une zéolite donnée, les plus importants sont la nature et la concentration des cations de nucléation autour desquels se développent les cages et canaux d'une zéolite. La température de cristallisation peut également déterminer la nature de la zéolite formée.

Dans le gel de croissance, les paramètres de cristallisation sont choisis de telle façon que la zéolite B soit thermodynamiquement plus stable. Il est surprenant que les germes de la zéolite A introduits dans ce milieu ne se transforment pas selon la règle d'Oswald en cristaux de la zéolite B.

Ce phénomène peut avoir plusieurs explications, liées à la taille des cristaux ou à leur faible surface de contact avec le milieu.

Le nombre de cristaux formés étant limité par la quantité de germes introduits, la zéolite est obtenue sous forme de microcristaux d'une taille voisine du micromètre. Or la stabilité thermique et chimique d'une

2

zéolite augmente avec la taille des cristaux.

Selon l'autre explication, c'est la zéolite B, thermodynamiquement stable dans le milieu, qui croissant à la surface de la zéolite A, assurerait la protection de cette dernière.

La formation de systèmes zéolitiques binaires selon l'invention est possible entre chaque couple de zéolites ayant les unités structurales en commun.

Nous décrivons le cas du couple offretite-zéolite omega et mordenite-zéolite omega.

Dans le cas de l'offretite et de la zéolite omega, les unités structurales en commun sont les cages gmelinite et les cycles à six tetraèdres $TO_4$.

Le réseau cristallin de l'offretite se distingue par un système de pores de $6,4.10^{-10}$m de diamètre selon l'axe longitudinal des canaux, alors que dans la zéolite omega les pores ont une ouverture voisine de $8.10^{-10}$m.

C'est dans cette association de deux zéolites à ouvertures de canaux différentes que réside l'intérêt de ces systèmes comme catalyseurs.

Dans un premier temps les germes de l'offretite sont formés dans un gel renfermant une source de silice et d'alumine, et des ions potassium et tetramethylammonium (TMA) dans les proportions exprimées en moles d'oxydes :

$2,38 - 15,8$ $K_2O$ ; $0,6 - 9,3$ $TMA_2O$ ; $Al_2O_3$ ; $5 - 40$ $SiO_2$ ; $380 - 1320$ $H_2O$

Les cages cancrinite de l'offretite se construisent autour des ions potassium, les cages gmelinite autour des ions tetramethylammonium.

Après vieillissement de ce gel, accompagné de formation de germes d'offretite, on introduit 1 à 10 % de ce gel et de préférence 2 à 5 % dans un gel de croissance, qui ne contient pas d'ions tetramethylammonium et où le potassium est remplacé par le sodium. La composition de ce gel est la suivante :

$4 - 8$ $Na_2O$ ; $Al_2O_3$ ; $10-20$ $SiO_2$ ; $160 - 400$ $H_2O$

Il y a formation de l'offretite jusqu'à épuisement des ions potassium, puis grâce à la relation d'épitaxie qui s'établit entre les deux structures, les cristaux de la zéolite omega croissent directement à la surface de l'offretite autour des ions sodium. Le rendement total en zéolite est fixé par le contenu en aluminium du mélange.

Dans le système binaire zéolite omega-mordenite, les unités structurales en commun sont des combinaisons de cycles à cinq et à quatre tetraèdres $TO_4$.

Le gel de nucléation contient en outre des sources de silice et d'alumine, des ions sodium et tetramethylammonium dans les proportions suivantes :

$3 - 10$ $Na_2O$ ; $0,1 - 3$ $TMA_2O$ ; $Al_2O_3$ ; $10 -30$ $SiO_2$ ; $160 - 700$ $H_2O$

Après vieillissement on introduit ce gel contenant des germes de la zéolite omega dans un gel de croissance de la même composition mais exempt d'ions tetramethylammonium. On introduit 2 à 25 % et de préférence 5 à 15 % de gel de nucléation dans le gel de croissance. Le mélange est maintenu à une température propice à la croissance de la mordenite. Après épuisement des ions tetramethylammonium, la mordenite commence à cristalliser en aiguilles fines entourant le noyau de zéolite omega. Les pores de la mordenite ont une ouverture de 6,6 à $7.10^{-10}$m comparé à une ouverture voisine de $8.10^{-10}$m de la zéolite omega.

Les systèmes zéolitiques binaires selon l'invention sont utiles comme catalyseurs, notamment dans les opérations de raffinage comme le craquage catalytique.

Les catalyseurs de craquage classiques fournissent à côté de l'essence attendue une quantité importante de gaz. Ainsi sur la zéolite ZSM-5 de MOBIL il y a formation d'environ 45 % d'essence d'indice d'octane de 97 et d'environ 20 % de gaz.

L'utilisation de systèmes zéolitiques mixtes selon l'invention permet d'éviter le craquage excessif et donc la formation de gaz.

En utilisant un système binaire composé d'un noyau d'offretite entouré de zéolite omega, pour le craquage catalytique des charges hydrocarbonées, les molécules encombrantes peuvent entrer dans les pores larges de la zéolite omega ou elles subissent un craquage. A leur tour les petites molécules formées par craquage peuvent entrer dans les pores plus étroits de l'offretite. Ces petites molécules sont isomérisées dans l'offretite, ce qui améliore l'indice d'octane de l'essence obtenu.

Les exemples suivants illustrent l'invention sans toutefois la limiter.

## EXEMPLE 1

Système binaire d'offrétite et de zéolite omega. On prépare un premier gel A permettant le développement de germes d'offretite à partir de 15g d'eau, 2,2 g de KOH, 3,05 g de TMAOH, $5H_2O$ (TMA = tétramethylammonium), 0,73 g de métakaolinite (kaolinite des Charentes épurée calcinée à 500°C sous air pendant 10 heures) et 2,63 g de silice (Gel de Silice Rhône Poulenc, 660 $m^2g^{-1}$) ce qui conduit à la stoechiométrie :

$6K_2O$ ; $2,56TMA_2O$ ; $Al_2O_3$ ; $15,3SiO_2$ ; $280H_2O$

Un gel B, de croissance, est préparé à partir de 15 g d'eau, 1,57 g de NaOH ; 0,73 g de métakaolinite et 2,63 g de silice, ce qui donne comme stoechiométrie :

$5,97$ $Na_2O$ ; $Al_2O_3$ ; $15,3$ $SiO_2$ ; $253$ $H_2O$.

A partir du gel A vieilli et du gel B frais on prépare deux mélanges AB, l'un contenant 2,5 % de gel A, l'autre 5 %. Ces mélanges sont transférés dans des ampoules en verre, scellées et maintenues à l'étuve à 110°C pendant 72 h sans agitation. Après lavage et séchage les précipités obtenus présentent des diagrammes de diffraction des rayons x de produits bien cristallisés dans lesquels on identifie les raies caractéristiques des zéolites offrétite et oméga (Tableau 1). D'après l'intensité relative de ces raies on peut estimer que le solide préparé à partir du mélange à 2,5% de gel A contient 80 % de zéolithe oméga et 20 % d'offrétite et celui préparé à partir du mélange à 5 % de gel A contient 50 % d'offrétite et 50 % de zéolite oméga. (Ces valeurs ne sont que des estimations, l'analyse quantitative sur la seule base des diffractogrammes de rayons x étant peu précise).

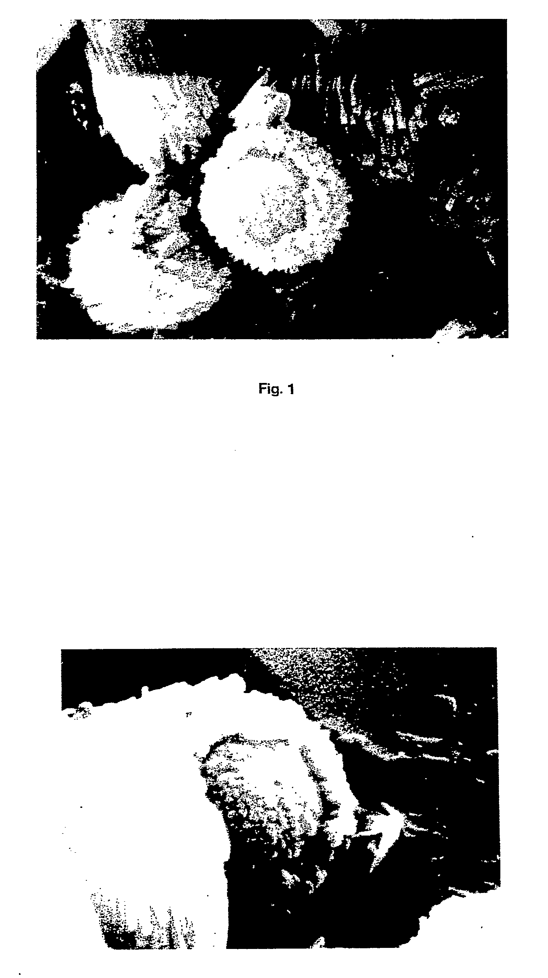

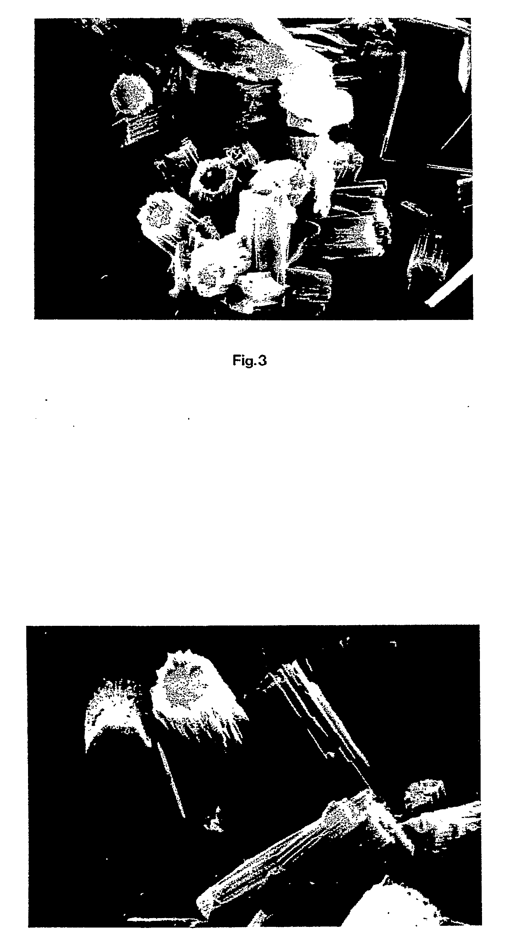

Les Figures 1 et 2 représentent des micrographies du solide obtenu par cristallisation du mélange à 5% de gel A obtenues sur un microscope à balayage CAMBRIDGE S-100 à deux agrandissements différents (22000 et 38000) du solide. Les particules ont environ 1,5 μm de diamètre pour 2 μm de long. Elles sont constituées d'un coeur d'offrétite enrobé d'aiguilles de zéolite oméga. Pour les deux zéolites la croissance s'est effectuée suivant l'axe C longitudinale de leur système hexagonal.

L'analyse chimique de cet échantillon donne la composition suivante, exprimée en moles d'oxyde :
$0,22K_2O$ ; $0,49Na_2O$ ; $0,29TMA_2O$ ; $Al_2O_3$ ; $7,1SiO_2$ ; $xH_2O$

L'échange des ions sodium et tétraméthylammonium par des traitements d'échange à l'acétate d'ammonium et des calcinations sous air à 500°C n'affectent pas la structure cristalline du produit.

## EXEMPLE 2:

Système binaire de zéolite omega et de mordénite. La procédure suivie est la même que dans l'exemple 1. On prépare un gel A à partir de 21,7 g d'$H_2O$ ; 2,2 g de NaOH, 2,51 g de TMAOH, $5H_2O$ ; 1,0 g de kaolinite et 4,16 g de silice, ce qui donne :
$7,2Na_2O$ ; $1,8TMA_2O$ ; $Al_2O_3$ ; $20SiO_2$ ; $315H_2O$

Ce gel est vieilli soit pendant 120 à 500 jours à température ambiante soit pendant 5 à 100 jours à 50°C. Un second gel B est préparé de façon analogue au gel A et à partir des mêmes constituants à l'exception du TMAOH, $5H_2O$ ce qui donne
$7,2Na_2O$ ; $Al_2O_3$ ; $20SiO_2$ ; $305H_2O$

On prépare un mélange AB à 10 % de gel A que l'on cristallise en ampoule scellée sans agitation à 145°C pendant 18 heures. Le solide lavé et séché conduit au diffractogramme de rayons x donné dans le Tableau 2 où l'on trouve les raies caractéristiques de la zéolite oméga et de la mordénite. L'examen par microscopie électronique montre que les particules de 0,5 à 1μm de large et 2 à 4 μm de long sont constituées d'un coeur de zéolite oméga sous forme de monocristaux prismatiques entourés d'aiguilles de mordénite. Comme dans l'exemple 1 les deux zéolites croissent selon leur axe C. Les figures 3 et 4 représentent les microphotographies obtenues sur un microscope à balayage CAMBRIDGE S-100 à deux agrandissements (10100 et 18000) du solide.

Après calcination sous air sec à 950°C pendant une heure l'échantillon conserve sa cristallinité et l'aspect des particules n'est pas modifié.

Tableau 1

Analyse et indexation du diffractogramme de rayons X de l'échantillon décrit dans l'exemple 1 (5% de gel A).

| DA | (I/Io × 100) | (h k l) | dA | (hkl) | dA |
|---|---|---|---|---|---|
| | Diffractogramme de l'échantillon | | | Diffractogramme de référence | |
| | | offrétite | | oméga | |
| 15,1 | (7) | | | (100) | 15,8 |
| 11,41 | (34) | (100) | 11,41 | (110) | |
| 9,11 | (37) | | | (110) | 9,09 |
| 7,82 | (8) | | | (200) | 7,87 |
| 7,79 | (11) | (001) | 7,60 | | |
| 6,78 | (15) | | | (101) | 6,86 |
| 6,60 | (29) | (110) | 6,59 | | |
| 6,32 | (19) | (101) | 6,29 | | |
| 5,94 | (10) | | | (210) | 5,94 |
| 4,69 | (18) | | | (211) | 4,69 |
| 4,55 | (23) | (201) | 4,54 | | |
| 4,33 | (28) | (210) | 4,31 | | |
| 3,96 | (11) | | | (400) | 3,91 |
| 3,76 | (100) | (002) | 3,74 | (002) | 3,79 |
| 3,57 | (58) | (102) | 3,56 | | |
| 3,51 | (57) | | | (112) | 3,51 |
| 3,33 | (22) | (301) | 3,38 | | |
| 3,30 | (17) | (320) | 3,29 | | |
| 3,15 | (58) | | 3,13 | (500) | 3,13 |
| 3,07 | (26) | | | (302) | 3,07 |
| 3,02 | (20) | | | (420) | 3,02 |
| 2,91 | (49) | | | (510) | 2,91 |
| 2,84 | (70) | | 2,83 | | |
| 2,76 | (13) | | | (402) | 2,76 |
| 2,49 | (6) | | | (520) | 2,51 |

Spectromètre:

CGR Theta 60
Radiation Cu K

Tableau 2

Analyse et indexation du diffractogramme de rayons X de l'échantillon décrit dans l'exemple 2.

| Diffractogramme de l'échantillon | | Diffractogramme de référence | | | |
| --- | --- | --- | --- | --- | --- |
| | | oméga | | mordenite | |
| DA | (I/I$_0$ × 100) | (h k l) | dA | (hkl) | dA |
| 16,831 | (14) | (100) | 15,84 | | |
| 13,517 | (7) | | | (110) | 13,4 |
| 10,201 | (12) | | | (020) | 10,2 |
| 9,1834 | (90) | (100) | 9,07 | (200) | 9,02 |
| 8,0256 | (23) | (200) | 7,86 | | |
| 6,8434 | (20) | (101) | 6,86 | | |
| 6,6613 | (18) | | | (111) | 6,50 |
| 6,3614 | (6) | | | (130) | 6,32 |
| 6,0046 | (51) | (210) | 5,94 | (021) | 6,02 |
| 5,8622 | (5) | | | (201) | 5,15 |
| 5,5413 | (6) | (201) | 5,47 | | |
| 5,3040 | (10) | (300) | 5,23 | | |
| 5,0576 | (4) | | | (221) | 5,03 |
| 4,9015 | (1) | | | (131) | 4,84 |
| 4,1260 | (47) | (211) | 4,67 | | |
| 4,5529 | (15) | | | (330) | 4,50 |
| 4,3965 | (12) | (310) | 4,36 | | |
| 4,0223 | (29) | | | (041) | 4,12 |
| 3,9621 | (16) | (400) | 3,92 | (420) | 3,97 |
| 3,8208 | (100) | (002) | 3,78 | (150) | 3,81 |
| 3,7199 | (27) | (102) | 3,69 | (241) | 3,13 |
| 3,6302 | (50) | (320) | 3,60 | | |
| 3,5227 | (75) | (112) | 3,50 | (002) | 3,52 |
| 3,4909 | (47) | | | (112) | 3,45 |
| 3,4292 | (29) | (202) | 3,42 | | |
| 3,4060 | (33) | | | (501) | 3,37 |
| 3,3681 | (16) | | | (022) | 3,27 |
| 3,2406 | (39) | (321) | 3,25 | (202) | 3,21 |
| 3,1661 | (96) | (500) | 3,14 | (060) | 3,15 |
| 3,0909 | (25) | (302) | 3,07 | | |
| 3,0475 | (40) | (420) | 3,02 | | |
| 2,9896 | (19) | (501) | 2,96 | | |
| 2,9208 | (76) | (510) | 2,90 | | |
| 2,6618 | (12) | (402) | 2,64 | | |
| 2,6255 | (7) | (511) | 2,64 | | |
| 2,5700 | (9) | (322) | 2,60 | | |
| 2,5337 | (15) | (520) | 2,51 | | |
| 2,3791 | (6) | (332) | 2,36 | | |
| 2,2761 | (12) | (440) | 2,26 | | |

EXEMPLE 3

Cet exemple concerne des essais de craquage catalytique d'une coupe pétrolière.

Les essais catalytiques consistent dans le traitement en pilote d'une charge d'hydrocarbures provenant de la distillation sous vide d'un résidu pétrolier. Ce pilote est décrit dans la norme ASTM D 3907.80 (technique MAT).

Cependant, les conditions opératoires ont été "sévérisées" pour mieux rendre compte des phénomènes obtenus lors du craquage catalytique dans une unité industrielle. Les conditions opératoires sont les suivantes :

température du lit catalytique : 530 °C

poids du catalyseur : 3 grammes

temps de réaction : 20 secondes

poids de charge en gramme passant par heure et par gramme de catalyseur : 30

Les effluents sont recueillis à la sortie du réacteur et analysés par chromatographie en phase gazeuse. Le coke formé à la surface du catalyseur est analysé par combustion.

Les caractéristiques de la charge utilisée pour les essais sont données ci-après :

Masse volumique à 15°C 0,9226

teneur en soufre 2,46 %

résidu Conradson 0,4 %

indice de réfraction à 20°C 1,5098

point d'aniline 77,8°C

distillation selon la norme ASTM D 1160 PI 272°C

10 % 355°C

50 % 432°C

80 % 482°C

PF 520°C

Les catalyseurs sont soumis préalablement aux essais à un traitement destiné à les transformer pour les rendre comparables aux catalyseurs sortant de la zone de régénération d'une unité industrielle de craquage catalytique. Au cours de cette opération de régénération, le catalyseur est en présence de vapeur d'eau et sous l'action de la température élevée, sa structure est transformée. Le traitement consiste à soumettre le catalyseur à une température de 775°C pendant 17 heures sous une atmosphère de 100 % de vapeur d'eau.

On a réalisé 4 essais de craquage catalytique sur différentes formulations de catalyseur.

Essais 1:

Le catalyseur utilisé lors de cet essai peut être considéré comme conventionnel. Il est constitué de 15 % en poids de zéolite Y dont une partie des ions sodium a été remplacée par des ions lanthane.

La composition de la zéolite Y échangée est la suivante:

$SiO_2$ : 57,3 % ; $Al_2O_3$ : 19,9 % ; $Na_2O$ : 4,0 % ; $La_2O_3$ : 18,8 %

La zéolite est dispersée dans une matrice de type silice-alumine.

Essai 2:

Le catalyseur utilisé lors de cet essai est obtenu par mélange mécanique du catalyseur précédent et d'une offretite synthétisée selon le brevet français n° 830 3804 à raison de 5 % poids d'offretite dans le catalyseur fini.

Essai 3:

Lors de cet essai on a utilisé le catalyseur de l'essai n° 1 auquel on a ajouté 5 % d'une zéolite T résultant de l'intercroissance d'offretite et d'érionite.

Essai 4:

Dans cet essai le catalyseur de l'essai 1 est mélangé mécaniquement avec un système zéolitique binaire selon la présente invention.

Pour préparer ce catalyseur on a procédé de la manière suivante :

Une solution d'alumine constituée de 75 g d'$Al_2O_3$ par litre est ajoutée goutte à goutte à une solution de silice contenant 53,1 g de trisilicate de sodium dans 580 g d'eau. Il y a floculation et formation d'un gel. Le mélange est agité puis le pH est ajusté par addition d'ammoniaque. La zéolite Y qui a été échangée au préalable est ajoutée au gel de silice-alumine obtenu. Le gel résultant est filtré, lavé et séché à l'étuve à 125°C. Le produit est ensuite broyé jusqu'à obtention de grains de diamètre inférieur à 250 μm puis échangé avec une solution à 3 % poids de sulfate d'ammonium. Les dernières étapes de préparation sont constituées par un lavage, un séchage et une calcination à 500°C pendant 12 heures. Le produit obtenu

7

est mélangé avec 5 % de zéolite binaire préparée selon l'exemple 1. Les résultats des essais sont présentés dans le tableau ci-après.

| No essai | 1 | 2 | 3 | 4 |
|---|---|---|---|---|
| Conversion (*) | 69,8 | 71,2 | 69,6 | 70,9 |
| Essence ($C_5$ à $C_{12}$) | 47,0 | 46,0 | 46,8 | 48,9 |
| Gaz ($C_1$ à $C_4$) | 16,5 | 18,5 | 16,5 | 16,4 |
| Coke | 3,8 | 3,1 | 4,2 | 2,7 |
| Hydrogène | 0,05 | 0,04 | 0,05 | 0,06 |
| (*) en % poids de la charge transformée. | | | | |

L'utilisation de la zéolite binaire décrite dans l'invention se traduit par une amélioration de la sélectivité en essence et une diminution du rendement en coke pour un niveau de conversion à peu près constant.

L'utilisation de l'offretite seule a eu pour effet de diminuer le rendement en coke tandis que la quantité de gaz produite augmentait.

Il apparaît que la zéolite T contenant des défauts dûs à une intercroissance cristalline est pratiquement sans effet sur le craquage catalytique en raison vraisemblablement du bouchage rapide de ses pores par le coke formé.

La technique MAT telle qu'utilisée dans les exemples précédents ne permet cependant pas de connaître la qualité de la coupe essence produite. C'est pourquoi une expérimentation dans un pilote à lit fluide construit sous licence de la société américaine ATLANTIC RICHFIELD a été réalisée.

Ce pilote est un pilote à lit fluide simulant une unité industrielle pourvu d'une zone réactionnelle et d'une zone de régénération. La fluidisation et circulation du catalyseur sont assurées par des débits d'azote et d'air dans les différentes sections du pilote.

Deux essais sont réalisées : essai n° 5 et essai n° 6, dans des conditions identiques et en utilisant le même distillat provenant de la distillation sous pression réduite d'un résidu atmosphérique du brut DJENO.

Les caractéristiques de la charge sont les suivantes :
masse volumique à 15°C : 0,9247
teneur en soufre (en % poids) : 2,46
teneur en azote (p.p.m.) : 1830
point d'aniline (°C) : 97
résidu Conradson (%) : 0,31
distillation PI : (°C) 340
PF : 532

Les conditions opératoires utilisées pour le pilote sont les suivantes :
température : 515°C
poids de charge en gramme passant par heure et par gramme de catalyseur : 20
teneur en coke du catalyseur à la sortie du régénérateur : 0,05
débit du catalyseur par rapport au débit de charge (poids/poids) : 6

Essai 5:

Dans cet essai le catalyseur est un catalyseur d'équilibre provenant d'une unité industrielle. Il contient 20 % de zéolite Y échangée avec des terres rares, le reste étant constitué par une matrice de type silice-alumine. Les tailles de particules sont comprises entre 40 et 120 μm.

Du fait de l'opération industrielle, ce catalyseur s'est chargé en métaux selon la composition suivante :
Nickel 810 p.p.m.
Vanadium 1320 p.p.m.
Sodium 3060 p.p.m.

Essai 6:

On procède à un mélange préalable du catalyseur de l'essai n° 5 avec 2,5 % de la zéolite binaire préparé selon l'exemple 1 qui a été désactivée à la vapeur d'eau selon le traitement décrit antérieurement.

Les résultats sont présentés ci-après. En particulier, l'indice d'octane de l'essence est mesuré selon les règles de l'art en utilisant le moteur CFR, décrit dans : P. Wuithier "Raffinage et Génie chimique" I, p. 15 (Editions Technip 1965).

| No essai | 5 | 6 |
|---|---|---|
| Conversion (*) | 72,5 | 72,2 |
| Rendements (*) | | |
| $H_2$ | 0,36 | 0,32 |
| Hydrocarbure en $C_1$ | 0,73 | 0,76 |
| Hydrocarbure en $C_2$ saturés | 1,02 | 1,25 |
| Hydrocarbure en $C_3$ saturés | 0,64 | 0,48 |
| Hydrocarbure en $C_3$ insaturés | 3,86 | 4,60 |
| Isobutane | 2,35 | 2,40 |
| Normal butane | 0,4 | 0,8 |
| Butènes | 5,13 | 6,8 |
| Total des gaz | 14,6 | 17,4 |
| Essence ($C_5$ – 220°C) | 53,0 | 54,8 |
| Coke | 4,9 | 4,5 |
| Indice d'octane | 92,5 | 94,3 |
| (*) % en poids de la charge. | | |

Le catalyseur de l'essai n° 6 présente l'effet remarquable d'améliorer le rendement en essence avec des niveaux de conversion et de formation de coke à peu près constants.

Il est surprenant que l'augmentation du rendement en essence s'accompagne aussi d'une amélioration de l'indice d'octane.

**Revendications**

1. Système zéolitique binaire composé de deux zéolites, A et B, ayant des unités structurales en commun, les cristaux de la zéolite A formant un noyau central sont entourés d'une couronne de cristaux de la zéolite B, les zéolites A et B étant disposées concentriquement et suivant le même axe longitudinal caractérisé en ce que les deux zéolites A et B ont des structures cristallines différentes.

2. Système zéolitique binaire selon la revendication 1 caractérisé en ce que la zéolite A formant le noyau central est l'offretite, et la zéolite B qui forme la couronne est la zéolite oméga.

3. Système zéolitique binaire selon la revendication 1 caractérisé en ce que la zéolite A formant le noyau central est la zéolite oméga et la zéolite B qui forme la couronne est la mordenite.

4. Procédé de synthèse de systèmes zéolitiques selon l'une des revendications 1 à 3 caractérisé en ce qu'on introduit un gel de nucléation renfermant des germes de la zéolite A dans un gel de croissance ou les paramètres de cristallisation favorisent la cristallisation de la zéolite B.

5. Procédé selon la revendication 4 caractérisé en ce que les paramètres de cristallisation favorisant la cristallisation de la zéolite B sont la nature ou la concentration du cation de nucléation ou la température.

6. Procédé catalytique de transformation des hydrocarbures caractérisé en ce que le catalyseur est un système zéolitique binaire selon l'une des revendications 1 à 3.

7. Procédé de craquage catalytique des hydrocarbures caractérisé en ce que le catalyseur est un système zéolitique selon les revendications 1 à 3.

**Patentansprüche**

1. Binäres Zeolithsystem, das sich aus zwei Zeolithen A und B zusammensetzt, die gemeinsame Struktureinheiten aufweisen, wobei die einen zentralen Kern bildenden Kristalle des Zeoliths A von einem Kristallkranz des Zeoliths B umgeben sind, die Zeolithen A und B konzentrisch angeordnet sind und derselben Längsachse folgen, dadurch gekennzeichnet, daß die beiden Zeolithe A und B verschiedene kristalline Strukturen aufweisen.

2. Binäres Zeolithsystem nach Anspruch 1, dadurch gekennzeichnet, daß der den zentralen Kern bildenden Zeolith A Offretit ist, und daß der den Kranz bildenden Zeolith B der Zeolith Omega ist.

3. Binäres Zeolithsystem nach Anspruch 1, dadurch gekennzeichnet, daß der den zentralen Kern bildenden Zeolith A der Zeolith Omega ist, und daß der den Kranz bildenden Zeolith B Mordenit ist.

4. Verfahren zur Synthese der Zeolithsysteme nach einem der Ansprüche 1 bis 3, dadurch gekennzeichnet, daß ein die Keime des Zeoliths A enthaltendes Nukleierungsgel einem Wachstumsgel zugeführt wird, wo die Kristallisationsparameter die Kristallisation des Zeoliths B fördern.

5. Verfahren nach Anspruch 4, dadurch gekennzeichnet, daß die die Kristallisation des Zeoliths B fördernden Kristallisationsparameter die Art oder die Konzentration des Nukleierungskations oder die Temperatur sind.

6. Katalytisches Verfahren zur Umwandlung von Kohlenwasserstoffen, dadurch gekennzeichnet, daß der Katalysator ein binäres Zeolithsystem nach einem der Ansprüche 1 bis 3 ist.

7. Verfahren zum katalytischen Kracken von Kohlenwasserstoffen, dadurch gekennzeichnet, daß der Katalysator ein Zeolithsystem nach den Ansprüchen 1 bis 3 ist.

**Claims**

1. Binary zeolitic system comprising two zeolites, A and B, having structural units in common, the crystals of zeolite A forming a central nucleus and being surrounded by a crown of crystals of zeolite B, the zeolites A and B being arranged concentrically and along the same longitudinal axis, characterised in that the two zeolites A and B are of different crystalline structures.

2. Binary zeolitic system according to claim 1, characterised in that the zeolite A forming the central nucleus is offretite and zeolite B which forms the crown is omega zeolite.

3. Binary zeolitic system according to claim 1, characterised in that zeolite A forming the central nucleus is omega zeolite and that zeolite B which forms the crown is mordenite.

4. Process for synthesizing zeolitic systems according to any one of claims 1 to 3, characterised in that a nucleation gel contained seeds of zeolite A is introduced into a growth gel in which the crystallisation parameters favour the crystallisation of zeolite B.

5. Process according to claim 4, characterised in that the crystallisation parameters favouring the crystallisation of zeolite B are the nature or the concentration of the nucleation cation or the temperature.

6. Catalytic process for the transformation of hydrocarbons characterised in that the catalyst is a binary zeolitic system according to any one of claims 1 to 3.

7. Process for the catalytic cracking of hydrocarbons characterised in that the catalyst is a zeolitic system according to claims 1 to 3.

Fig. 1

Fig.2

Fig. 3

Fig. 4